# EUROPÄISCHE PATENTSCHRIFT

(11) **EP 2 674 681 B1**
(45) Veröffentlichungstag und Bekanntmachung des Hinweises auf die Patenterteilung: **16.08.2017**
(21) Anmeldenummer: 13171831.4
(22) Anmeldetag: 13.06.2013
(51) Int. Cl.: F24D 3/10, E03C 1/02, F16L 3/13, F16L 3/22, F24H 9/06, F16L 59/135

(54) **Wandhalterung für Installationselemente, insbesondere für Heizkreisverteiler, Installationselement zur Aufnahme in einer derartigen Wandhalterung, Installationselement-Montagesystem sowie Verfahren zur Montage eines Installationselements an einer Wand oder einer Tragstruktur**
Wall support for installation elements, in particular for heating circuit distributors, installation element for mounting in such a wall support, installation element mounting system and method for mounting an installation element to a wall or a support structure
Support mural pour éléments d'installation, notamment pour répartiteurs de circuits de chauffage, élément d'installation destiné à être reçu dans un tel support mural, système de montage d'éléments d'installation et procédé de montage d'un élément d'installation sur un mur ou une structure porteuse

(30) Priorität: 15.06.2012 DE 102012105197
(43) Veröffentlichungstag der Anmeldung: 18.12.2013
(73) Patentinhaber: REHAU AG + Co, 95111 Rehau (DE)
(72) Erfinder: Baur-Dürr, Stephan, 91085 Weisendorf (DE); Koch, Klaus Paul, 90513 Zirndorf (DE)

(56) Entgegenhaltungen:
- EP-A2- 1 045 209
- WO-A1-2008/041897
- DE-A1- 19 912 617
- DE-U1- 20 003 394
- DE-U1- 20 100 221
- DE-U1- 29 618 787
- DE-U1-202006 017 051
- GB-A- 2 480 669

## Beschreibung

Die vorliegende Erfindung betrifft ein Installationselement-Montagesystem für Heizkreisverteiler.

Die WO 2008/041897 A1 beschreibt ein Montagesystem für Heizkreisverteiler mit einem Halterungsgrundkörper, der als durchgehendes Profil mit Nuten ausgebildet, in die radiale Erweiterungen modularer Heizkreisverteiler aufgenommen werden können.

Montagesysteme für Heizkörper sind beispielsweise aus der DE 201 00 221 U1, der DE 200 03 394 U1 und der DE 296 18 787 U1 bekannt.

Der Aufbau von Segmenten modular gebauter Heizkreisverteiler ist im Stand der Technik bekannt. Als repräsentative Beispiele seien die DE 20 2006 017 051 U1, die GB 2 480 669 A und die EP 1 045 209 A2 genannt.

Wandhalterungen für derartige Heizkreisverteiler sind beispielsweise aus der DE 199 12 617 A1 bekannt. Die darin beschriebene Wandhalterung umfasst einen Grundkörper mit länglicher Erstreckung, der zwei Aufnahmen für beabstandet voneinander anbringbare Installationselement umfasst. Jeder Aufnahme sind passende Bügelelemente zugeordnet, die zusammen mit den Aufnahmebereichen jeweils einen Aufnahmeraum zur Aufnahme eines Installationselements bilden. Optional kann zwischen dem Bügelelement und Grundkörper ein Anpassungskeil eingesetzt werden. Grundkörper, Bügelelement und Anpassungskeil sind aus Kunststoff spritzgegossene Elemente. Ihre Montage erfolgt mittels Spannelementen, beispielsweise mittels Schrauben. Nachteilig an dem Wandhalter wird gesehen, dass es sich dabei um ein mehrteiliges Element handelt, so dass lose Teile an die Montagestelle transportiert werden müssen, die an der Montagestelle verlorengehen können.

Dementsprechend liegt der vorliegenden Erfindung die Aufgabe zugrunde, ein Installationselement-Montagesystem für Heizkreisverteiler zur Verfügung zu stellen, das die Nachteile des Stands der Technik überwindet. Insbesondere soll das erfindungsgemäße Installationselement-Montagesystem für Heizkreisverteiler eine einfache Montage bei hinreichender Stabilisierung des Heizkreisverteilers im Halteelement gewährleisten. Darüber hinaus soll die Wandhalterung des das erfindungsgemäßen Installationselement-Montagesystems einen vereinfachten Aufbau besitzen und eine vereinfachte Wandmontage eines Heizkreisverteilers ermöglichen. Darüber hinaus soll die Wandhalterung des erfindungsgemäßen Installationselement-Montagesystems kostengünstig herstellbar sein.

Diese und andere Aufgabe werden durch ein Installationselement-Montagesystem für Heizkreisverteiler mit den Merkmalen des Anspruchs 1 gelöst.

Gemäß der vorliegenden Erfindung wurde erkannt, dass eine Aufnahme für ein Verriegelungselement am Halterungsgrundkörper benachbart zum Aufnahmebereich für den Heizkreisverteiler dem Halterungsgrundkörper im Aufnahmebereich eine gewisse Flexibilität verleiht, die das Eindrehen des Heizkreisverteilers in den jeweiligen Aufnahmebereich vereinfacht. Darüber hinaus kann das Verriegelungselement nach dem Eindrehen des Heizkreisverteilers in den Aufnahmebereich in die entsprechende Aufnahme eingesetzt und dort festgelegt werden. Dadurch wird dem Halterungsgrundkörper Stabilität verliehen, so dass der in dem Aufnahmebereich aufgenommene Heizkreisverteiler nicht mehr ohne weiteres aus diesem entnehmbar ist. Zusätzlich ist das Verriegelungselement bzw. die Verriegelungselemente nicht mit dem Heizkreisverteiler in einem in das Halteelement eingesetzten Zustand verbunden ist. Dies gewährleistet eine einfache Montage bei hinreichender Stabilisierung des Heizkreisverteilers im Halteelement. Eine einfache Montage des Heizkreisverteilers wird dadurch ermöglicht, dass mindestens ein Aufnahmebereich für einen Heizkreisverteiler ein oberes Rastelement und ein unteres Rastelement aufweist, die jeweils in einer entsprechenden Rastaufnahme des Heizkreisverteilers aufgenommen werden können.

Dementsprechend liegt die vorliegende Erfindung in der Bereitstellung eines Installationselement-Montagesystems, das mindestens eine Wandhalterung für Heizkreisverteiler, umfassend einen Halterungsgrundkörper mit einer Wandauflagefläche und mindestens einem Aufnahmebereich für einen Heizkreisverteiler, wobei mindestens einer der Aufnahmebereiche ein oberes Rastelement und ein unteres Rastelement aufweist, die jeweils mit einer entsprechenden Rastaufnahme des Heizkreisverteilers in Eingriff bringbar sind, und mindestens einen Heizkreisverteiler mit einem länglichen Gehäuse, dessen Außenwandungen mindestens zwei Rastaufnahmen aufweisen, die derart angeordnet sind, dass das obere Rastelement und das untere Rastelement eines Aufnahmebereichs der Wandhalterung jeweils in einer der Rastaufnahmen verrastend aufnehmbar sind, wobei der Halterungsgrundkörper benachbart zu mindestens einem Aufnahmebereich für einen Heizkreisverteiler mindestens eine Aufnahme für ein Verriegelungselement aufweist und die Wandhalterung für jede der Aufnahmen weiter ein Verriegelungselement umfasst, wobei das Verriegelungselement bzw. die Verriegelungselemente nicht mit dem Heizkreisverteiler in einem in das Halteelement eingesetzten Zustand verbunden ist.

Ein Verfahren zur Montage des Heizkreisverteilers an einer Wand oder an einer Tragstrukturumfasst die Stufen des Festlegens eines Halterungskörpers mit einer Wandauflagefläche und mindestens einem Aufnahmebereich für einen Heizkreisverteiler, wobei der Aufnahmebereich in oberes Rastelement und ein unteres Rastelement aufweist, die jeweils mit einer entsprechenden Rastaufnahme des Heizkreisverteilers in Eingriff bringbar sind, an einer Wand oder einer Tragstruktur; des Einführens des oberen Rastelements oder des unteren Rastelements des Aufnahmebereichs in eine entsprechende Rastaufnahme des Heizkreisverteilers; sowie des Eindrehens des Heizkreisverteilers in den Aufnahmebereich, bis das untere Rastelement oder das obere Rastelement des Aufnahmebereichs in der noch freien Rastaufnahme des Heizkreisverteilers aufgenommen ist.

Hinsichtlich der Wandhalterung für Heizkreisverteiler kann es sich als günstig erweisen, wenn der Halterungskörper in mindestens einem Aufnahmebereich für einen Heizkreisverteiler mindestens ein Dehnungselement aufweist. Dadurch wird dem Halterungsgrundkörper eine gewisse Flexibilität verliehen, durch die während des Montageverfahrens das Eindrehen des Heizkreisverteilers in den jeweiligen Aufnahmebereich erleichtert wird. In diesem Zusammenhang ist es bevorzugt, wenn mindestens ein Dehnungselement als Dehnungsfuge ausgebildet ist. Vorzugsweise erstreckt sich diese Dehnungsfuge über die gesamte Breite des Aufnahmebereichs.

Erfindungsgemäß weist der Halterungsgrundkörper benachbart zu zumindest einem Aufnahmebereich für ein Installationselement mindestens eine Aufnahme für ein Verriegelungselement auf und die Wandhalterung umfasst weiter für jede Aufnahme ein entsprechendes Verriegelungselement. Auch eine derartige Aufnahme für ein Verriegelungselement verleiht dem Halterungsgrundkörper im Aufnahmebereich eine gewisse Flexibilität, die das Eindrehen des Heizkreisverteilers in den jeweiligen Aufnahmebereich vereinfacht. Darüber hinaus kann das Verriegelungselement nach dem Eindrehen des Heizkreisverteilers in den Aufnahmebereich in die entsprechende Aufnahme eingesetzt und dort festgelegt werden. Dadurch wird dem Halterungsgrundkörper Stabilität verliehen, so dass der in dem Aufnahmebereich aufgenommene Heizkreisverteiler nicht mehr ohne weiteres aus diesem entnehmbar ist. Dabei ist das Verriegelungselement bzw. die Verriegelungselemente erfindungsgemäß nicht mit dem Installationselement in einem in das Halteelement eingesetzten Zustand verbunden. Dies gewährleistet eine einfache Montage bei hinreichender Stabilisierung des Heizkreisverteilers im Halteelement.

Hinsichtlich des Heizkreisverteilers kann es sich als vorteilhaft herausstellen, wenn dieser mindestens eine der Rastaufnahmen als Nut ausgebildet ist. Dies bietet eine einfache Aufnahme der Rastelemente in den entsprechenden Nuten. Diesbezüglich ist es besonders bevorzugt, wenn alle Rastaufnahmen des Heizkreisverteilers jeweils als Nut ausgebildet sind. Dadurch kann der Heizkreisverteiler nach Einsetzen in die Wandhalterung leicht durch Verschieben in Längsrichtung des Heizkreisverteilers ausgerichtet werden. Dabei ist es besonders bevorzugt, wenn sich mindestens eine der Nuten über mindestens 80 %, vorzugsweise mindestens 90 % und besonders bevorzugt über mindestens 95 % der Länge des Heizkreisverteilers erstreckt. Dadurch kann ein Ausrichten des Heizkreisverteilers über einen langen Weg erfolgen. Darüber hinaus bewirkt dies eine Wahrnehmung der Rastaufnahmen als Designelement. Diesbezüglich ist es wiederum besonders bevorzugt, wenn sich alle Nuten des Heizkreisverteilers mindestens über die angegeben Anteile der Länge des Heizkreisverteilers erstrecken. Besonders bevorzugt sind an dem Heizkreisverteiler weitere Nuten vorhanden, die vorzugsweise im Wesentlichen parallel zueinander und im Wesentlichen äquidistant zueinander verlaufen.

Zur Herstellung der Wandhalterung und des Heizkreisverteilers hat sich Spritzgießen als bevorzugte Art der Herstellung erwiesen. Polyvinylchlorid (PVC), Polyethylen (insbesondere HDPE), Polyamid (PA; insbesondere Polyamid-6 und Polyamid-6,6) und Polypropylen (insbesondere statistisches Polypropylen PP-R) dienen als bevorzugte Materialien für die Wandhalterung und den Heizkreisverteiler.

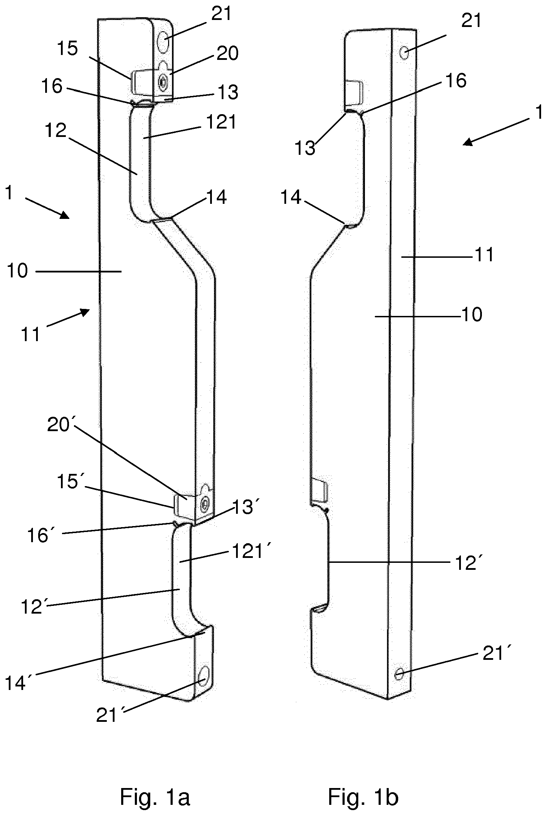

Im Folgenden wird die vorliegende Erfindung unter Bezugnahme auf die in den Figuren gezeigte Ausführungsform der vorliegenden Erfindung im Detail erläutert. Dabei zeigen
- Fig. 1a: eine perspektivische Vorderseitenansicht einer Ausführungsform einer Wand-halterung;
- Fig. 1 b: eine perspektivische Rückseitenansicht der in Fig. 1 a gezeigten Ausführungs-form der Wandhalterung;
- Fig. 2a: eine perspektivische Vorderansicht der in den Fig. 1 a und 1 b gezeigten Wandhalterung mit zwei darin aufgenommenen Heizkreisverteilern; und
- Fig. 2b: eine Seitenansicht des in Fig. 2 dargestellten Ausführungsbeispiels der vorliegenden Erfindung.

In Fig. 1 a ist eine Ausführungsform der Wandhalterung 1 in einer perspektivischen Vorderseitenansicht gezeigt. Die Wandhalterung 1 für Heizkreisverteiler 30, 30' umfasst einen Halterungsgrundkörper 10 sowie zwei Verriegelungselemente 20, 20'. Der vorzugsweise länglich ausgebildete Halterungsgrundkörper 10 verfügt über eine vorzugsweise ebene Wandauflagefläche 11 und weist im Bereich seiner beiden Enden jeweils eine Durchgangsbohrung 21, 21' auf. Durch die Durchgangsbohrungen 21, 21' können Befestigungselemente wie Schrauben geführt werden, um den Halterungsgrundkörper 10 an einer Wand oder einer entsprechenden Tragstruktur zu befestigen.

An der der Wandauflagefläche 11 gegenüberliegenden Seite weist der Halterungsgrundkörper 10 zwei voneinander beabstandete Aufnahmebereiche 12, 12' auf. In der in Fig. 1a gezeigten Ausführungsform verfügen die Aufnahmebereiche über jeweils eine parallel zur Längsachse des Halterungsgrundkörpers 10 verlaufende Auflagefläche 121, 121', die in ihren Enden jeweils abgerundet ausgebildet ist. An jeweils einem der abgerundeten Abschnitte des Aufnahmebereichs 12, 12' ist jeweils ein als Dehnungsfuge ausgebildetes Dehnungselement 16, 16' angeordnet. In alternativen Ausführungsformen der Wandhalterung 1 für Heizkreisverteiler 30, 30' können die Dehnungselemente auch aus einem gegenüber dem Material des Halterungsgrundkörpers 10 elastischeren Material hergestellt sein.

Die Aufnahmebereiche 12, 12' weisen an ihrer zur Wandauflagefläche 11 gegenüberliegenden Seite des Halterungsgrundkörpers 10 jeweils ein oberes Rastelement 13, 13' und ein unteres Rastelement 14, 14' auf.

Oberhalb, jedoch beabstandet vom jeweiligen oberen Rastelement 13, 13' angeordnet, befindet sich jeweils eine Aufnahme 15, 15', in die jeweils ein Verriegelungselement 20, 20' aufgenommen ist, das durch jeweils ein Spannelement, vorzugsweise eine Schraube, mit dem Halterungsgrundkörper 10 verbunden ist.

In Fig. 1b ist die in Fig. 1a in einer perspektivischen Ansicht der Rückseite des Halterungsgrundkörpers 10 gezeigt. Darin ist die ebene Wandauflagefläche 11 des Halterungsgrundkörpers 10 gut zu erkennen.

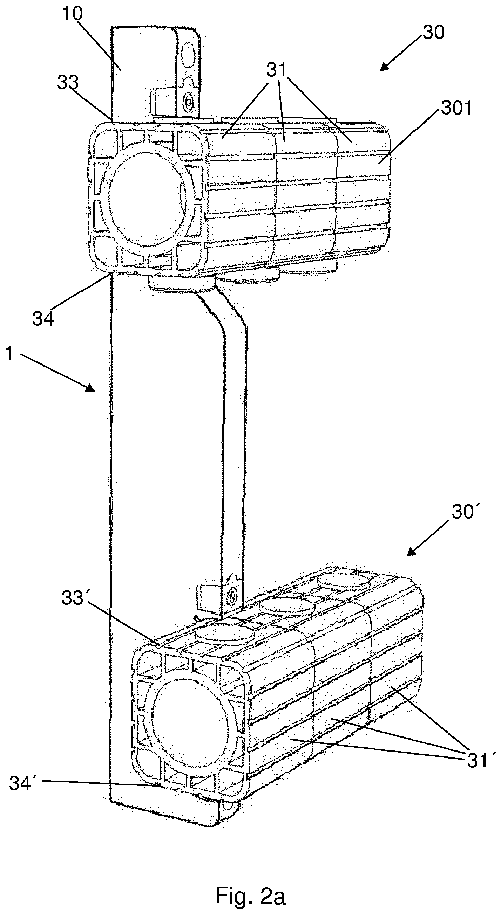

Fig. 2a zeigt eine perspektivische Vorderansicht der in den Figuren 1 a und 1 b gezeigten Ausführungsform der Wandhalterung 1, wobei zwei als Heizkreisverteiler 30, 30' in den beiden Aufnahmebereichen 12, 12' des Halterungsgrundkörpers 10 aufgenommen sind.

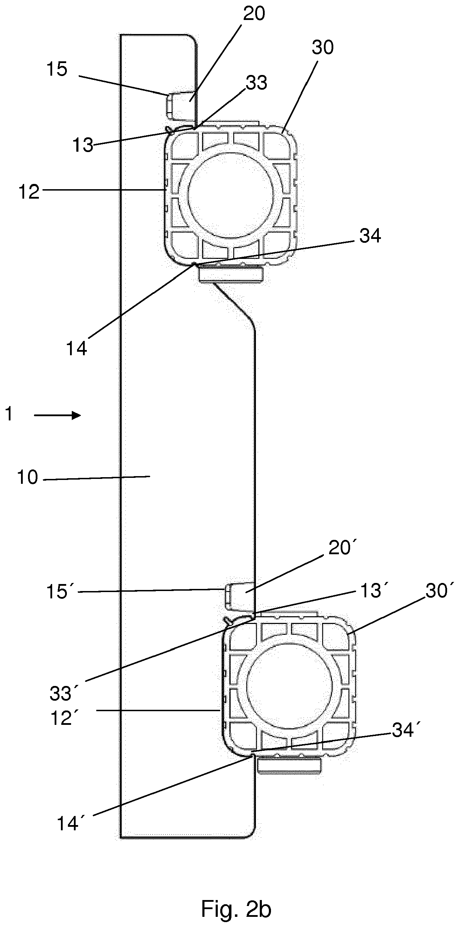

Derartige Heizkreisverteiler 30, 30' sind grundsätzlich bekannt, beispielsweise aus der DE 30 43 422 C2. Derartige Heizkreisverteiler sind vorzugsweise aus mehreren, zueinander identischen Elementen aufgebaut, wobei die einzelnen Elemente jeweils einen etwa quadratischen Querschnitt mit abgerundeten Eckbereichen aufweisen. Im zusammengesetzten Zustand ergeben mehrere (in der in Fig. 2a und Fig. 2b dargestellten Ausführungsform jeweils drei) derartige Einzelsegmente ein längliches Gehäuse 301, 301', in dessen Mittellängsachse eine zentrale Bohrung vorhanden ist. An einander gegenüberliegenden Flächen des Gehäuses 301, 301' sind Anschlusselemente für eine Rohrleitung und gegenüberliegend ein Ventil und Zubehör angeordnet. Zwischen der zentralen Bohrung und den Außenwandungen des länglichen Gehäuses befinden sich Hohlkammern, durch die Stäbe geführt werden können, durch die die Einzelsegmente 31, 31' der erfindungsgemäßen Installationselemente 30, 30' zusammengehalten werden.

Im Gegensatz zu den aus der DE 30 43 422 C2 bekannten Installationselementen sind entlang der Außenwandungen des länglichen Gehäuses 301, 301' der erfindungsgemäßen verwendeten Heizkreisverteiler 30, 30' sich in Längsrichtung der Heizkreisverteiler 30, 30' erstreckende und als Designelemente fungierende Nuten angeordnet, wobei die Nuten sich vorzugsweise über die gesamte Länge der Heizkreisverteiler 30, 30' erstrecken und der Abstand zwischen zwei jeweils benachbarten Nuten vorzugsweise im Wesentlichen gleich ist.

Wie aus der in Fig. 2b gezeigten Seitenansicht der in Fig. 2a dargestellten Ausführungsform der vorliegenden Erfindung hervorgeht, sind an zwei einander gegenüberliegenden Seitenflächen der Heizkreisverteiler 30, 30' jeweils zwei Nuten 33, 33', 34, 34' derart angeordnet, dass die oberen Rastelemente 13, 13' und unteren Rastelemente 14, 14' der beiden Aufnahmebereiche 12, 12' des Halterungsgrundkörpers 10 in diesen Nuten 33, 33', 34, 34' aufgenommen sind. Diese Nuten 33, 33', 34, 34' fungieren somit als Rastaufnahmen für die oberen Rastelemente 13, 13' und unteren Rastelemente 14, 14' der Aufnahmebereiche 12, 12'. In der Halterung 1 aufgenommen sind die beiden erfindungsgemäßen Heizkreisverteiler 30, 30' in horizontaler und in vertikaler Richtung versetzt zueinander angeordnet.

Die beiden Heizkreisverteiler 30, 30' ergeben zusammen mit der Wandhalterung 1, in deren Aufnahmebereiche 12, 12' sie aufgenommen sind, ein erfindungsgemäßes Installationselement-Montagesystem.

Zur Montage eines derartigen Installationselement-Montagesystems an einer Wand oder einer entsprechenden Tragstruktur wird zunächst der Halterungsgrundkörper 10 der Wandhalterung 1 mittels durch die Durchgangsbohrungen 21, 21' geführter Schrauben an der Wand oder der Tragstruktur festgelegt, wobei die Wandauflagefläche 11 entsprechend zur Wand oder zur Tragstruktur gerichtet ist. Danach wird zunächst ein Heizkreisverteiler 30 in den oberen Aufnahmebereich 12 des Halterungsgrundkörpers 10 aufgenommen. Dazu wird zunächst das untere Rastelement 14 des Aufnahmebereichs 12 in die als Nut ausgebildete Rastaufnahme 34 des Heizkreisverteilers 30 eingeführt und der Heizkreisverteiler 30 so lange drehend in Richtung des Aufnahmebereichs 12 bewegt, bis das obere Rastelement 13 des Aufnahmebereichs 12 rastend in die Rastaufnahme 33 des Heizkreisverteilers 30 aufgenommen ist. Die für diesen Vorgang erforderliche Flexibilität des Halterungsgrundkörpers im Bereich des Aufnahmebereichs 12 kommt durch das als Fuge ausgebildete Dehnungselement 16 und die Aufnahme 15 zustande. Danach liegt die zum Halterungsgrundkörper gerichtete Außenwand des Heizkreisverteilers 30 vorzugsweise an der Auflagefläche 121 des Aufnahmebereichs 12 an. Zur Arretierung des in den Aufnahmebereich 12 aufgenommenen Heizkreisverteilers 30 wird ein Verriegelungselement 20 in die Aufnahme 15 eingeführt und durch ein Befestigungselement, beispielsweise eine Schraube, an dem Halterungsgrundkörper 10 befestigt. Auf diese Weise wird lediglich die Starrheit des Halterungsgrundkörpers 10 erhöht, so dass der in die Aufnahme 12 aufgenommene Heizkreisverteiler 30 nicht ohne Werkzeugeinsatz oder Gewalteinwirkung aus dem Aufnahmebereich 12 entfernt werden kann. Die Verriegelungselemente 20, 20' berühren nach der Montage die in die in die Aufnahmen 12, 12' aufgenommenen Heizkreisverteiler 30, 30' aber nicht, sind also beabstandet von diesen angeordnet.

In entsprechender Weise wird der zweite Heizkreisverteiler 30' im unteren Aufnahmebereich 12' des Halterungsgrundkörpers 10 festgelegt.

Die vorliegende Erfindung wurde unter Bezugnahme auf die in den Figuren gezeigte Ausführungsform im Detail erläutert. Es versteht sich jedoch, dass die vorliegende Erfindung nicht auf diese Ausführungsform beschränkt ist.

## Patentansprüche

1. Installationselement-Montagesystem, das mindestens eine Wandhalterung (1) für Heizkreisverteiler (30, 30'), umfassend einen Halterungsgrundkörper (10) mit einer Wandauflagefläche (11) und mindestens einem Aufnahmebereich (12, 12') für einen Heizkreisverteiler (30, 30'), wobei mindestens einer der Aufnahmebereiche (12, 12') ein oberes Rastelement (13, 14) und ein unteres Rastelement (13', 14') aufweist, die jeweils mit einer entsprechenden Rastaufnahme (33, 33', 34, 34') des Heizkreisverteilers (30, 30') in Eingriff bringbar sind, und mindestens einen Heizkreisverteiler (30, 30') mit einem länglichen Gehäuse (301, 301'), dessen Außenwandungen mindestens zwei Rastaufnahmen (33, 33', 34, 34') aufweisen, die derart angeordnet sind, dass das obere Rastelement (13, 14) und das untere Rastelement (13', 14') eines Aufnahmebereichs (12, 12') der Wandhalterung (1) jeweils in einer der Rastaufnahmen (33, 33', 34, 34') verrastend aufnehmbar sind, aufweist,
**dadurch gekennzeichnet, dass**
der Halterungsgrundkörper (10) benachbart zu mindestens einem Aufnahmebereich (12, 12') für einen Heizkreisverteiler (30, 30') mindestens eine Aufnahme (15, 15') für ein Verriegelungselement (20, 20') aufweist und die Wandhalterung (1) für jede der Aufnahmen (15, 15') weiter ein Verriegelungselement (20, 20') umfasst, wobei das Verriegelungselement (20, 20') bzw. die Verriegelungselemente (20, 20') nicht mit dem Heizkreisverteiler (30, 30') in einem in das Halteelement eingesetzten Zustand verbunden ist/sind.

2. Installationselement-Montagesystem für Heizkreisverteiler (30, 30') nach Anspruch 1, **dadurch gekennzeichnet, dass** der Halterungsgrundkörper (10) in mindestens einem Aufnahmebereich (12, 12') für ein Installationselement (30, 30') mindestens ein Dehnungselement (16, 16') aufweist.

3. Installationselement-Montagesystem für Heizkreisverteiler (30, 30') nach Anspruch 1, **dadurch gekennzeichnet, dass** mindestens eine der Rastaufnahmen (33, 33', 34, 34') als Nut (33, 33', 34, 34') ausgebildet ist.

4. Installationselement-Montagesystem für Heizkreisverteiler (30, 30') nach Anspruch 3, **dadurch gekennzeichnet, dass** alle Rastaufnahmen (33, 33', 34, 34') des erfindungsgemäßen Installationselements jeweils als Nut (33, 33', 34, 34') ausgebildet sind.

5. Installationselement-Montagesystem für Heizkreisverteiler (30, 30') nach Anspruch 3 oder Anspruch 4, **dadurch gekennzeichnet, dass** sich mindestens eine der Nuten (33, 33', 34, 34'), vorzugsweise alle Nuten (33, 33', 34, 34'), über mindestens 80 %, der Länge des Installationselements (30, 30') erstreckt bzw. erstrecken.

## Claims

1. Installation-element mounting system having at least one wall holder (1) for heating-circuit distributors (30, 30'), comprising a main holder body (10) having a wall-bearing surface (11) and at least one accommodating region (12, 12') for a heating-circuit distributor (30, 30'), wherein at least one of the accommodating regions (12, 12') has an upper latching element (13, 14) and a lower latching element (13', 14'), which can each be brought into engagement with a corresponding latching mount (33, 33', 34, 34') of the heating-circuit distributor (30, 30'), and at least one heating-circuit distributor (30, 30') having an elongate housing (301, 301'), of which the outer walls have at least two latching mounts (33, 33', 34, 34') which are arranged such that the upper latching element (13, 14) and the lower latching element (13', 14') of an accommodating region (12, 12') of the wall holder (1) can each be accommodated with latching action in one of the latching mounts (33, 33', 34, 34'),
**characterized in that**,
adjacent to at least one accommodating region (12, 12') for a heating-circuit distributor (30, 30'), the main holder body (10) has at least one mount (15, 15') for a locking element (20, 20'), and the wall holder (1) further comprises a locking element (20, 20') for each of the mounts (15, 15'), wherein the locking element (20, 20') or the locking elements (20, 20') is/are not connected to the heating-circuit distributor (30, 30') when the latter has been inserted into the holding element.

2. Installation-element mounting system for heating-circuit distributors (30, 30') according to Claim 1, **characterized in that** the main holder body (10) has at least one expansion element (16, 16') in at least one accommodating region (12, 12') for an installation element (30, 30').

3. Installation-element mounting system for heating-circuit distributors (30, 30') according to Claim 1, **characterized in that** at least one of the latching mounts (33, 33', 34, 34') is designed in the form of a groove (33, 33', 34, 34').

4. Installation-element mounting system for heating-circuit distributors (30, 30') according to Claim 3, **characterized in that** all the latching mounts (33, 33', 34, 34') of the installation element according to the invention are each designed in the form of a groove (33, 33', 34, 34').

5. Installation-element mounting system for heating-circuit distributors (30, 30') according to Claim 3 or Claim 4, **characterized in that** at least one of the grooves (33, 33', 34, 34'), preferably all of the grooves (33, 33', 34, 34'), extend/extends over at least 80% of the length of the installation element (30, 30').

## Revendications

1. Système de montage d'éléments d'installation, avec au moins un support mural (1) pour des répartiteurs de circuits de chauffage (30, 30'), comprenant un corps de base de support (10) avec une face d'appui mural (11) et au moins une zone de réception (12, 12') pour un répartiteur de circuit de chauffage (30, 30'), dans lequel au moins une des zones de réception (12, 12') présente un élément d'encliquetage supérieur (13, 14) et un élément d'encliquetage inférieur (13', 14'), qui peuvent être mis en prise respectivement avec un logement d'encliquetage correspondant (33, 33', 34, 34') du répartiteur de circuit de chauffage (30, 30'), et au moins un répartiteur de circuit de chauffage (30, 30') avec un boîtier allongé (301, 301'), dont les parois extérieures présentent au moins deux logements d'encliquetage (33, 33', 34, 34'), qui sont disposés de telle manière que l'élément d'encliquetage supérieur (13, 14) et l'élément d'encliquetage inférieur (13', 14') d'une zone de réception (12, 12') du support mural (1) puissent être posés par encliquetage respectivement dans un des logements d'encliquetage (33, 33', 34, 34'),
**caractérisé en ce que** le corps de base de support (10) présente à proximité d'au moins une zone de réception (12, 12') pour un répartiteur de circuit de chauffage (30, 30') au moins un logement (15, 15') pour un élément de verrouillage (20, 20') et le support mural (1) comprend en outre un élément de verrouillage (20, 20') pour chacun des logements (15, 15'), dans lequel l'élément de verrouillage (20, 20') ou les éléments de verrouillage (20, 20') n'est pas relié(s) au répartiteur de circuit de chauffage (30, 30') dans un état inséré dans l'élément de maintien.

2. Système de montage d'éléments d'installation pour des répartiteurs de circuits de chauffage (30, 30') selon la revendication 1, **caractérisé en ce que** le corps de base de support (10) présente au moins un élément d'allongement (16, 16') dans au moins une zone de réception (12, 12') pour un élément d'installation (30, 30').

3. Système de montage d'éléments d'installation pour des répartiteurs de circuits de chauffage (30, 30') selon la revendication 1, **caractérisé en ce qu'**au moins un des logements d'encliquetage (33, 33', 34, 34') est réalisé sous forme de rainure (33, 33', 34, 34').

4. Système de montage d'éléments d'installation pour des répartiteurs de circuits de chauffage (30, 30') selon la revendication 3, **caractérisé en ce que** tous les logements d'encliquetage (33, 33', 34, 34') de l'élément d'installation selon l'invention sont réalisés respectivement sous forme de rainure (33, 33', 34, 34').

5. Système de montage d'éléments d'installation pour des répartiteurs de circuits de chauffage (30, 30') selon la revendication 3 ou la revendication 4, **caractérisé en ce qu'**au moins une des rainures (33, 33', 34, 34'), de préférence toutes les rainures (33, 33', 34, 34'), s'étend ou s'étendent sur plus de 80 % de la longueur de l'élément d'installation (30, 30').
